# EUROPEAN PATENT APPLICATION

(11) **EP 0 882 395 A1**
(43) Date of publication of application: **09.12.1998**
(21) Application number: 98109905.4
(22) Date of filing: 29.05.1998
(51) Int. Cl.: A01K 89/0155

(54) **A fishing reel with a brake mechanism controlled by a fishing line sensor**

(30) Priority: 05.06.1997 SE 9702130
(71) Applicant: Berkley, Inc., Spirit Lake, IA 51360 (US)
(72) Inventor: Axelsson, Robert, 560 28 Lekeryd (SE); Ylikangas, Roger, 29335 Olofström (SE)
(74) Representative: Ström, Tore

(57) **Abstract**

A fishing reel having a spool (13) receiving a fishing line (16) thereon, a brake mechanism (15, 19) for said fishing reel, and a line sensor (23) co-operating operatively with the fishing line. The line sensor is connected to the brake mechanism to engage the brake mechanism in dependence of slacking of the line when being paid out from the spool, and includes two mutually spaced parallel bars (24A, 24B) interconnected at the ends thereof by means of end pieces (25) mounted for pivoting movement about an axis parallel with the bars which are evenly spaced on either side thereof. The fishing line runs through the line tension sensor at the upper side of one of said bars and at the lower side of the other one of said bars.

## Description

### Background of the Invention

### Field of the invention

The invention relates to a fishing reel having a spool receiving a fishing line thereon, a brake mechanism for said fishing reel, and a line sensor co-operating operatively with the fishing line and connected to the brake mechanism to engage the brake mechanism in dependence of slacking of the line when being paid out from the spool, the line sensor including two mutually spaced parallel bars interconnected at the ends thereof by means of end pieces.

### Description of the Prior Art

It is a previously known technique to control braking the rotation of a spool when the fishing line is being paid out therefrom, by a line tension sensor operatively connected to a brake mechanism and actuated by slack occurring in the fishing line and operatively connected to a brake mechanism. US Patent Nos. 2,205,641, 2,262,462 and 5,289,992 disclose reels having a brake shoe which is biased to engage a brake disc or brake drum by means of a spring and operates as a friction brake and which is disengaged from the brake disc or the brake drum, respectively, by a line tension sensor connected to the brake shoe when the fishing line running from the spool in contact with the sensor is taut. Should the fishing line slack when the spool is rotating in the pay out direction the brake shoe will be engaged for frictional braking of the spool in order to prevent backlash. Backlash is the situation in which a great number of loose fishing line windings form on the spool and lead to a tangling of the fishing line. The line tension sensor described in US A-2 205 641 comprises two bars parallel to each other and interconnected by end pieces the line tension sensor being mounted for pivotal movement about the axis of one of said bars. The fishing line passes the line tension sensor at the lower side of said one bar and through a slot formed by the other bar.

A problem existing in prior art line tension sensors, is the difficulty in exactly determining the amount of brake mechanism movement needed to avoid backlash when the line tension sensor initially moves as a result of a relatively small amount of initial slack in the fishing line. The small amount of initial slack can be due to the stiffness of the fishing line, usually a mono line of plastics, such as polyamide. An accurate control of the brake mechanism by small movements of the line tension sensor requires a relatively complicated brake mechanism for a satisfactory function thereof.

Another problem in connection with prior art line tension sensor controlled brake mechanisms is that the brake mechanism is affected by vibrations of the fishing rod so that the brake mechanism can engage the brake drum when this is not called for in order to avoid backlash. A further problem with the prior art is that a fishing line consisting of a mono line passing over the line tension sensor and being bent over the sensor produces a resistance to the unwinding of the fishing line from the spool.

An object of the invention is to provide a fishing reel having a brake mechanism controlled by a line tension sensor wherein said sensor due to slacking of the fishing line produces a large movement for controlling engagement of the brake mechanism so that such engagement can be accurately controlled.

The fishing reel of the invention is of the kind referred to above wherein the line sensor by means of the end pieces is mounted for pivoting movement about an axis parallel with the bars which are evenly spaced on either side thereof, said fishing line running through the line tension sensor at the upper side of one of said bars and at the lower side of the other one of said bars.

The fishing reel of the invention is particularly advantageous for use in combination with a fishing line consisting of a super line, i. e. a spun line usually of kelvar, which substantially lacks stiffness and has a low friction coefficient, because the line tension sensor then can operate with large angular motion.

### Brief Description of the Drawings

At present preferred embodiments of the invention will be described in more detail below reference being made to the accompanying drawings in which
**FIG. 1** is a perspective view of a fishing reel of the invention, a brake mechanism of simplified construction being shown in disengaged position,
**FIG. 2** is an end view of the fishing reel of FIG. 1 with the brake in disengaged position, and
**FIGS. 3 and 4** are views as in FIGS. 1 and 2 but showing the brake mechanism in the engaged position.

### Description of the Preferred Embodiments

Referring to the drawings the fishing reel comprises two end plates 10 and 11 which are interconnected and are mutually spaced by means of a number, for example four, parallel rods 12 which are fixed by screw connection to the end plates and together with these form the frame of the reel. Means (not shown) should be connected to two of the rods for mounting the reel to a fishing rod. A spool 13 is positioned between the end plates and is rotatably mounted in said plates. The spool has a shaft 14 which passes coaxially therethrough and is fixedly attached to the spool. A brake drum 15 is fixedly mounted to the shaft coaxially therewith and projects from the outside of end plate 11. A brake mechanism is mounted to end plate 11 to be engaged with the brake drum when the spool is rotating and a fishing line 16 received on the spool is being paid out therefrom. The brake mechanism is of simplified construction and comprises a double armed lever 17 forming a brake arm which is pivotally mounted on a pin 18 on end plate 11. At the right end the brake arm forms a brake shoe 19 for cooperation with the brake drum, and at the left end the brake arm forms a rack segment 20 the centre thereof being located on the pivot axis of the brake arm. A helical tension spring 21 is mounted between the right end of the brake arm and a pin 22 formed by a projecting portion of one of the bars 12 biasing the right end of the brake arm in clockwise direction about pin 18

A line tension sensor 23 includes two cylindrical bars 24A and 24B spaced from each other and extending parallel to one another and shaft 14 thus forming the side edges of the sensor. The bars are connected at their ends to two end pieces 25 extending perpendicularly to the bars and forming the ends of the sensor. By way of pivots one of them being shown at 26 the end pieces are rotatably mounted in end plates 10 and 11 for rotation about an axis extending in parallel with the bars which are evenly spaced on either side thereof. Said axis and bars 24A and 24B are parallel to the rotational axis of spool 13. A gear wheel 27 is fixedly connected to the pivot 26 mounted in end plate 11 and engages rack 20 on brake arm 17.

The fishing reel can include in the conventional way a crank for manually rotating the spool, a line guide, adjustable centrifugal and friction brakes, and such other refinements as are commonly provided on fishing reels. Such details are not shown and described herein as they are irrelevant in connection with the invention.

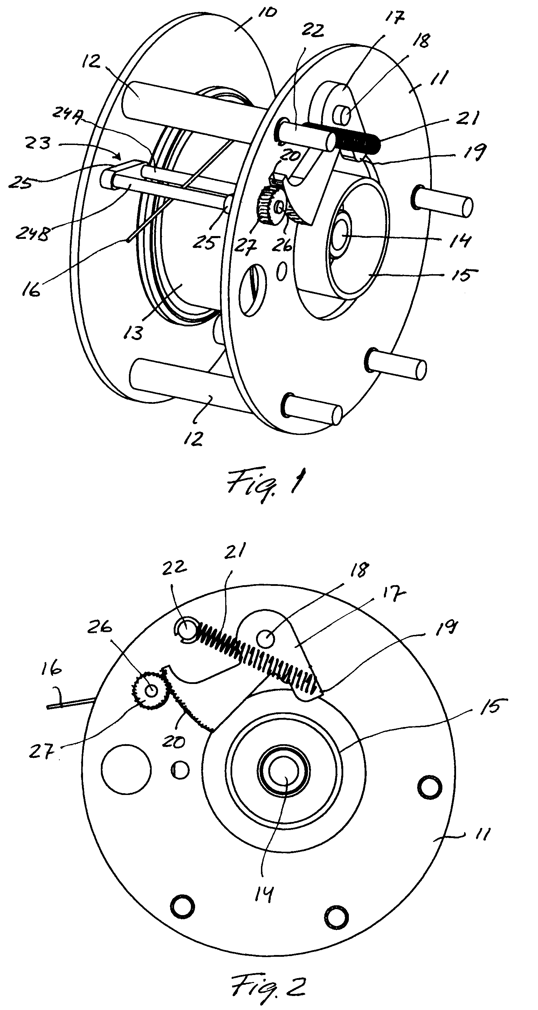

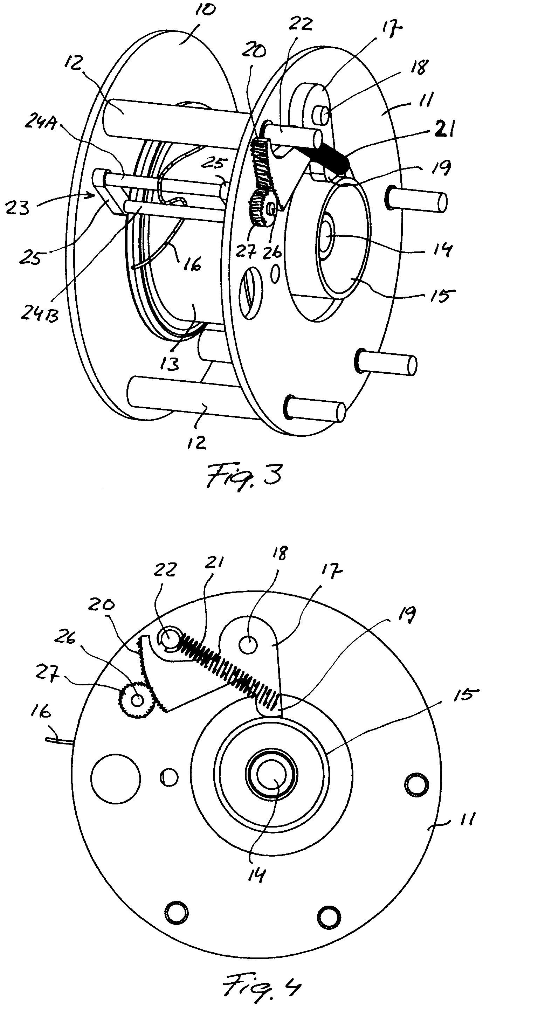

As will be seen in FIG. 1 fishing line 16 received on spool 13 extends from the spool through the line tension sensor 23 at the upper side of bar 24A and at the lower side of bar 24B. The fishing line is taut which means that it is paid out from the spool under normal conditions. When the line tension sensor is kept in the position disclosed in FIG. 1 by the taut fishing line brake arm 17 is maintained in the position shown in FIGS. 1 and 2 against the bias of spring 21 so that brake shoe 19 is disengaged from brake drum 15 and spool 13 can rotate freely.

If fishing line 16 slacks the situation illustrated in FIGS. 3 and 4 will arise. The fishing line will be bent over bars 24A and 24B as shown in FIG 3. If the fishing line consists of a super line i. e. a spun line which substantially lacks stiffness and has a low friction coefficient, the portion of the fishing line passing through the line tension sensor will be substantially S-shaped. When the fishing line is slacking the line tension sensor 23 under the bias of spring 21 will rotate counter-clockwise as seen in FIGS. 1 and 2 and brake arm 17 will rotate clockwise so that brake shoe 19 will be engaged with brake drum 15 the rotation of spool 13 being retarded and the risk of backlash being eliminated or substantially reduced. When fishing line 16 is being taut again line tension sensor 23 will rotate clockwise and brake arm 17 will rotate counter-clockwise so that brake shoe 19 will be disengaged from brake drum 15.

The line tension sensor 23 described is particularly useful in combination with a super line since due to the softness arid flexibility of the super line the rotational movement of the sensor when the fishing line is being slack will be large so that the operation of the brake mechanism will be more accurate.

Line tension sensor 23 described can be modified. For example, the two bars 24A and 24B and the two end pieces 25 can integrally form a rectangular frame which can be made of a wire bent to the required rectangular shape. The sensor can also be formed by casting of metals or plastics. Then, the sensor could include the pivots as integral parts thereof. The sensor including the pivots can also comprise a stamped metal sheet wherein the portion of the frame corresponding to bar 24A forms a convex upper side and the portion of the frame corresponding to bar 24B forms a convex lower side as seen in cross section both portions having rounded edges.

As will be understood line tension sensor 23 described can be operatively connected with brake mechanisms of other types e.g. the brake mechanism described in WO 97/29632 comprising a wedge brake arm operatively connected to a friction brake arm. Rack 20 engaged by gear wheel 27 mounted to shaft 26 of line tension sensor 23 then is provided on the wedge brake arm. Controlled by the sensor the brake mechanism initially will engage the brake drum for friction braking of the spool and then if such braking does not remove an upcoming backlash will bring the spool to an abrupt stop by wedge braking.

While specific embodiments of the invention have been described in detail above, it is to be understood that various further modifications may be made from specific details described without departing from the spirit and scope of the invention.

## Claims

1. A fishing reel having a spool (13) receiving a fishing line (16) thereon, a brake mechanism (15, 19) for said fishing reel, and a line sensor (23) co-operating operatively with the fishing line (16) and connected to the brake mechanism to engage the brake mechanism in dependence of slacking of the line when being paid out from the spool, the line sensor including two mutually spaced parallel bars (24A, 24B) interconnected at the ends thereof by means of end pieces (25), **characterized** in that the line sensor by means of the end pieces is mounted for pivoting movement about an axis parallel with the bars (24A, 24B) which are evenly spaced on either side thereof, said fishing line (16) running through the line tension sensor (23) at the upper side of one of said bars and at the lower side of the other one of said bars.

2. Fishing reel as in claim 1, **characterized** in that the bars (24A, 24B) are cylindrical.

3. Fishing reel as in claim 1 or 2, **characterized** in that the line sensor (23) is connected with the brake mechanism by means of a gear transmission (20, 27).

4. Fishing reel as in claim 3, **characterized** in that the brake mechanism is spring biased to engage the brake drum (15) and that said one bar (24A) is held under pressure against the line (16) by the spring bias.

5. Fishing reel as in any of claims 1 to 4, **characterized** in that said bars (24A, 24B) are mounted to the end pieces (25).

6. Fishing reel as in any of claims 1 to 4, **characterized** in that said bars (24A, 24B) and said end pieces (25) are made integral as a stamped metal sheet.

7. Fishing reel as in any of claims 1 to 4, **characterized** in that said bars (24A, 24B) and said end pieces are made integral as a metal or plastic casting.

8. Fishing reel as in any of claims 1 to 7, **characterized** in that the fishing line (16) received by the spool (13) is a superline.
